# EUROPÄISCHE PATENTANMELDUNG

(11) **EP 4 560 858 A1**
(43) Veröffentlichungstag der Anmeldung: **28.05.2025**
(21) Anmeldenummer: 24209639.4
(22) Anmeldetag: 29.10.2024
(51) Int. Cl.: H02G 3/12, H02G 3/08

(54) **INSTALLATIONSDOSE FÜR DIE ELEKTROINSTALLATION**

(30) Priorität: 22.11.2023 DE 202023106908 U
(71) Anmelder: f-tronic GmbH, 66131 Saarbrücken (DE)
(72) Erfinder: Fohs, Peter, 66399 Mandelbachtal (DE)
(74) Vertreter: Keil & Schaafhausen Patentanwälte PartGmbB

(57) **Zusammenfassung**

Die Erfindung betrifft eine Installationsdose für die Elektroinstallation mit einem einseitig offenen, topfförmigen Dosenkörper, der wenigstens eine Seitenwand (3) und einen daran in einem Übergangsbereich anschließenden Boden (2) aufweist, die einen Installationsraum (4) umschließen, wobei in dem Dosenkörper mehrere aufbrechbare und/oder durchstoßbare Installationsöffnungen (5) vorgesehen sind, **dadurch gekennzeichnet,** dass auf der dem Installationsraum (4) abgewandten Rückseite des Bodens (2) ein Kanal (11) vorgesehen ist, in den wenigstens eine Einlassöffnung (9) aus dem Installationsraum (4) mündet, und dass der Kanal (11) wenigstens eine seitliche Auslassöffnung (12) aufweist, die in der Nähe des Übergangsbereichs positioniert ist.

## Beschreibung

Die vorliegende Erfindung betrifft eine Installationsdose für die Elektroinstallation, insbesondere eine sogenannte Unterputz-Installationsdose, die in einer Öffnung einer Wand eingebaut werden kann.

Derartige Installationsdosen sind beispielsweise aus der DE 20 2017 105 736 U1 bekannt. Installationsdosen weisen meist eine einseitig offenen, topfförmigen Dosenkörper auf, der wenigstens eine Seitenwand und einen daran in einem Übergangsbereich anschließenden Boden aufweist. Der Boden und die wenigstens eine Seitenwand umschließen einen Installationsraum. Um Kabel oder Leerrohre in den Installationsraum zu führen, sind in dem Dosenkörper mehrere aufbrechbare und/oder durchstoßbare Installationsöffnungen vorgesehen.

Zur Befestigung von Installationsdosen in einer Öffnung einer Wand sind verschiedene Verankerungssysteme bekannt, bei denen die Installationsdose in der Wand mit Putz oder Mörtel befestigt, festgeklemmt, eingeklebt und/oder mittels Krallen fixiert werden kann.

Unter anderem ist es auch bekannt, sogenannten Montageschaum zu verwenden, was vielfach als einfacher als die Verwendung von z.B. Putz oder Mörtel empfunden wird. Montageschaum wird meist als Einkomponenten-Polyurethanschaum angeboten, der mittels eines Aerosols aus einer Dose ausgebracht werden kann. Eine Eigenschaft von Polyurethanschaum ist es, dass dieser während des Aushärtens stark aufquillt, üblicherweise mit einer Volumenvergrößerung um den Faktor 20 bis 30. Dies hat den Vorteil, dass Montageschaum sich von der Applikationsstelle rasch ausbreitet und in Hohlräume und Hinterschnitte fließen kann, bevor er aushärtet.

Hierzu wird der Montageschaum mittels einer Lanze durch eine Öffnung im Boden der Installationsdose auf die Rückseite der Dose gesprüht. Wenn Montageschaum allerdings in größerer Menge auf die dem Installationsraum abgewandte Seite einer Installationsdose gelangt, kann die Installationsdose aufgrund der Volumenvergrößerung des Montageschaums aus der Öffnung der Wand herausgedrückt werden. Dies ist unerwünscht, weil dadurch das Maß zum Abschluss der Putzkante nicht mehr passt. Teilweise werden daher auch spezielle Schäume eingesetzt, die weniger stark aufquellen.

Der vorliegenden Erfindung liegt daher die Aufgabe zu Grunde, eine Installationsdose vorzuschlagen, die in einfacher Weise auch unter Verwendung von stark aufquellendem Montageschaum in einer Wand befestigt werden kann.

Diese Aufgabe wird durch eine Installationsdose mit den Merkmalen des Anspruchs 1 gelöst. Bevorzugte Ausführungsformen der Erfindung sind aus den abhängigen Ansprüchen ersichtlich.

Erfindungsgemäß ist dazu bei einer Unterputz-Installationsdose der oben genannten Art auf der dem Installationsraum abgewandten Seite des Bodens ein Kanal vorgesehen, in den wenigstens eine Einlassöffnung aus dem Installationsraum mündet. Der Kanal weist zudem wenigstens eine seitliche Auslassöffnung auf, die in der Nähe des Übergangsbereichs positioniert ist. Vorteilhaft wird dadurch erreicht, dass Montageschaum in an sich bekannter Weise mittels einer Lanze durch die Einlassöffnung, die beispielsweise im Boden der Installationsdose angeordnet ist, hinter die Dose, also auf die dem Installationsraum abgewandte Rückseite des Bodens, gesprüht werden kann, dort aber durch den Kanal in seitlicher Richtung gelenkt wird, so dass der Montageschaum zunächst im Wesentlichen in den Zwischenraum zwischen der wenigstens einen Seitenwand der Installationsdose und der Laibung der Öffnung der Wand gelangt und die Installationsdose damit fixiert. Der Anteil des auf die Rückseite des Bodens gelangenden Montageschaums reduziert sich dabei, was die Gefahr eines ungewollten Herausdrückens der Installationsdose signifikant senkt. Auf diese Weise ist es möglich, handelsüblichen Montageschaum, wie Einkomponenten-Polyurethanschaum, zu verwenden, um eine Installationsdose rasch, ohne weitere Hilfsmittel und passgenau in einer Wandöffnung festzulegen.

Vorzugsweise ist der Kanal als ein mit Ausnahme der Einlassöffnung(en) und der Auslassöffnung(en) geschlossener Kanal ausgebildet, der beispielsweise durch den Boden und eine Abdeckung definiert ist. Die Abdeckung kann einstückig mit dem Dosenkörper ausgebildet sein. Alternativ kann die Abdeckung auch als separates Bauteil ausgebildet sein, das sich beispielsweise auf dem Boden der Installationsdose verrasten oder einstecken lässt.

Bei der erfindungsgemäßen Installationsdose kann der Kanal zumindest bereichsweise durch eine im Boden ausgebildete Sicke, die in den Installationsraum ragt, ausgebildet sein. Mit anderen Worten muss der Bodens nicht vollständig eben ausgebildet sein, sondern der Boden kann insbesondere im Bereich des Kanals, auch in den Installationsraum hineinragend, profiliert sein. Dies kann auch die Steifigkeit der Installationsdose verbessern. Grundsätzlich ist die Lage und Gestaltung des Kanals derart, dass Montageschaum entlang der dem Installationsraum abgewandten Rückseite des Bodens in Richtung zu den Seitenwänden geleitet wird. Beispielsweise definiert der außerhalb des Kanals liegende Bereich des Bodens eine Ebene, wobei der Kanal ganz oder teilweise in dieser Ebene liegt.

Es hat sich als besonders zweckmäßig erwiesen, wenn der Kanal im Wesentlichen mittig an dem Boden angeordnet ist. Der Kanal kann sich im Wesentlichen über die gesamte Breite des Bodens erstrecken. Beispielsweise erstreckt sich der Kanal ausgehend von der wenigstens einen Einlassöffnung, die z.B. mittig im Boden der Installationsdose angeordnet sein kann, in zwei Richtungen radial nach außen und weist an seinen der wenigstens einen Einlassöffnung abgewandten Enden jeweils eine seitliche Auslassöffnung auf. Hierdurch wird eine besonders gute Verteilung des Montageschaums auf zwei gegenüberliegende Seiten erreicht.

Nach einer alternativen Ausführungsform kann der Kanal mehrere Teilkanäle aufweisen, die ausgehend von der wenigstens einen Einlassöffnung radial nach au-ßen verlaufen und jeweils in seitlich Auslassöffnungen münden.

Der Kanal hat vorzugsweise einen flachen, beispielsweise etwa rechteckigen, Querschnitt, so dass der Kanal in der Ebene des Bodens breiter ist als in der dazu senkrechten Tiefenrichtung. Damit wird der für den Kanal erforderliche Bauraum in Tiefenrichtung gering gehalten, so dass der für den Installationsraum zur Verfügung stehende Platz nicht wesentlich verringert wird.

Um eine Verklebung der Installationsdose auch auf der dem Installationsraum abgewandten Rückseite des Bodens sicherzustellen, kann der Kanal wenigstens eine weitere Auslassöffnung aufweisen, die auf die dem Installationsraum abgewandte Seite des Bodens mündet. Diese rückseitige Verklebung mit Montageschaum erhöht den Widerstand gegen Herausziehen der Installationsdose aus der Wandöffnung. Diese weiteren Auslassöffnungen sind vorzugsweise zu der wenigstens einen Einlassöffnung versetzt angeordnet, so dass der durch die Einlassöffnung in den Kanal eintretende Montageschaum zunächst umgelenkt wird. Der Montageschaum kann daher nicht ungehindert auf die dem Installationsraum abgewandte Rückseite des Bodens fließen.

In einem Beispiel weist der Kanal eine Einlassöffnung, zwei seitliche Auslassöffnungen und wenigstens zwei, insbesondere vier, weitere Auslassöffnungen auf. Dabei kann der Öffnungsquerschnitt der seitlichen Auslassöffnungen größer sein, insbesondere um den Faktor 1,5 bis 10, als der Öffnungsquerschnitt der weiteren Auslassöffnungen.

Wenn der Kanal seitlich über die wenigstens eine Seitenwand hinausragt, wird besonders wirkungsvoll vermieden, dass eine zu große Menge des Montageschaums auf die dem Installationsraum abgewandte Rückseite des Bodens fließen kann. Zusätzlich oder alternativ hierzu kann der Dosenkörper angrenzend an die wenigstens eine seitliche Auslassöffnung des Kanals wenigstens einen seitlich über die wenigstens eine Seitenwand hinausragenden Vorsprung aufweisen. Dies verhindert, dass eine zu große Menge des Montageschaums aus der Auslassöffnung auf die dem Installationsraum abgewandte Rückseite des Bodens fließen kann. Der Vorsprung kann beispielsweise als eine seitliche Verlängerung des Bodens ausgebildet sein.

Die erfindungsgemäße Unterputz-Installationsdose kann besonders variable eingesetzt und befestigt werden, wenn die wenigstens eine Einlassöffnung durch ein an einer Sollbruchstelle aufbrechbares Wandelement und/oder eine durchstoßbare Membran verschlossen ist. Die im Auslieferungszustand der Installationsdose derart verschlossene Einlassöffnung vermeidet unnötige Öffnungen, wenn die Installationsdose beispielsweise nicht mittels Montageschaums befestigt wird.

Nach einer Ausführungsform der Erfindung weist der Dosenkörper sechs Seitenwände auf. Mit anderen Worten kann die Installationsdose eine sechseckige Grundform haben. Alternativ ist es auch möglich, dass die Installationsdose eine rechteckige, ovale oder zylindrische Grundform aufweist.

Wenn an der wenigstens einen Seitenwand deformierbare Halterippen vorgesehen sind, lässt sich die erfindungsgemäße Installationsdose in einer Wandöffnung festklemmen. Die Größe der Halterippen ist dabei so bemessen, dass der Außenumfang der Installationsdose mit diesen Halterippen etwas größer als die Wandöffnung ist, so dass sich die Halterippen beim Einsetzen der Installationsdose in die Wandöffnung in dieser verformen und verkrallen können. Wandöffnungen für Installationsdosen sind häufig zylindrisch mit einem Durchmesser von 82 mm.

Weiter kann die Installationsdose seitliche Vorsprünge oder einen Kragen aufweisen, die als Anschlag dienen, wenn die Installationsdose in die Wandöffnung eingesetzt wird. Damit ist ein definierter Abschluss zu einer Putzoberfläche möglich.

In dem Dosenkörper können mehrere Installationsöffnungen mit unterschiedlichem Öffnungsquerschnitt und/oder unterschiedlicher Kontur ausgebildet sein, um die Anbindung verschiedener Kabel- oder Leerrohrquerschnitte zu ermöglichen.

Bei einer winddicht verschlossenen Unterputz-Installationsdose sind die Installationsöffnungen mit einer durchstoßbaren, elastischen Membran verschlossen.

Weiter betrifft die Erfindung eine Kombination aus wenigstens einer Installationsdose der oben genannten Art und einer Dose, die einen Einkomponenten-Polyurethanschaum enthält.

Die Erfindung wird nachfolgend anhand eines Ausführungsbeispiels und unter Bezugnahme auf die Zeichnungen näher erläutert. Dabei bilden alle beschriebenen und/oder bildlich dargestellten Merkmale für sich oder in beliebiger Kombination den Gegenstand der Erfindung, unabhängig von ihrer Zusammenfassung in den Ansprüchen oder deren Rückbezügen.

Es zeigen schematisch:

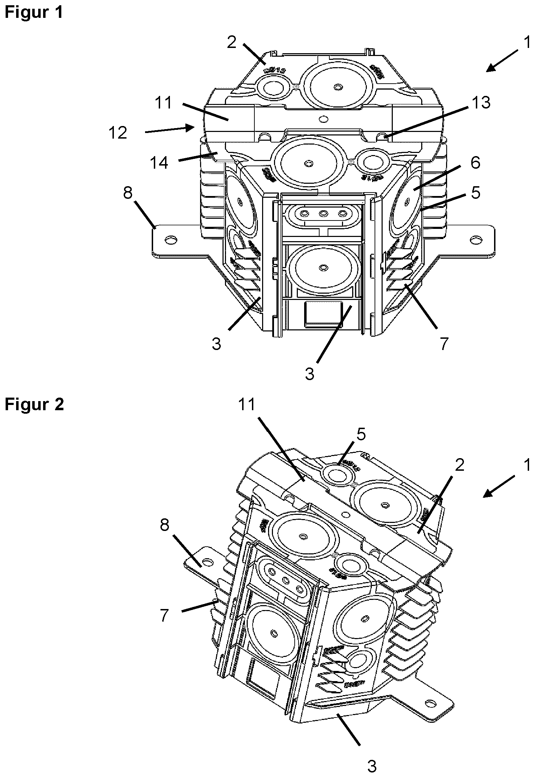

- Figur 1: eine perspektivische Ansicht einer erfindungsgemäßen Installationsdose,
- Figur 2: eine weitere perspektivische Ansicht der in Figur 1 gezeigten Installationsdose,
- Figur 3: eine Seitenansicht der in Figur 1 gezeigten Installationsdose,
- Figur 4: eine Draufsicht auf die in Figur 1 gezeigte Installationsdose,
- Figur 5: eine weitere perspektivische Ansicht der in Figur 1 gezeigten Installationsdose, und
- Figur 6: eine Schnittansicht der in Figur 1 gezeigten Installationsdose.

Die in den Zeichnungen verwendeten Bezugszeichen und deren Bedeutung sind in der Bezugszeichenliste zusammengefasst aufgelistet. Grundsätzlich sind in den Figuren gleiche Elemente mit gleichen Bezugszeichen versehen.

Die in den Figuren dargestellte Installationsdose 1 weist einen Boden 2 und in dem dargestellten Beispiel sechs Seitenwände 3 auf, die zusammen einen einseitig offenen Installationsraum 4 umschließen. Die Seitenwände 3 stoßen dabei in einem etwa rechtwinkligen Übergangsbereich an den Boden 2 an. Dieser Übergangsbereich kann auch abgeschrägt oder abgerundet ausgebildet sein.

Im Boden 2 und den Seitenwänden 3 sind mehrere Installationsöffnungen 5 ausgebildet, die durch eine durchstoßbare Membran 6 verschlossen sind. Die Erfindung ist nicht auf die in dem Beispiel der Figuren gezeigte Anzahl, Form oder Größe der Installationsöffnungen 5 beschränkt. Alternativ zu der Membran 6 können Installationsöffnungen 5 auch durch entlang einer Sollbruchstelle herausbrechbare Wandelemente (nicht gezeigt) verschlossen sein.

An einigen oder allen Seitenwänden 3 sind radial abstehende Halterippen 7 ausgebildet, die elastisch oder plastisch verformbar sind, wenn die Installationsdose in eine Wandöffnung eingesteckt wird. Weiter sind zwei kragenartige Vorsprünge 8 an Seitenwänden 3 vorgesehen, die als Anschlag dienen, wenn die Installationsdose 1 in die Wandöffnung eingesetzt wird.

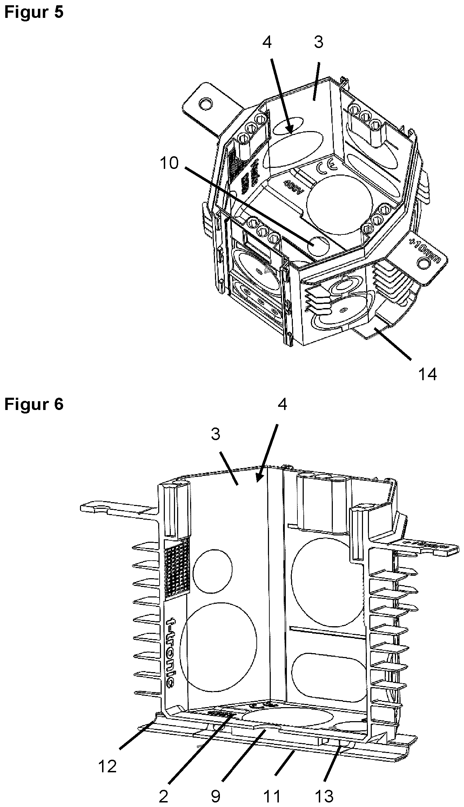

In dem Boden 2 ist etwa mittig eine Einlassöffnung 9 vorgesehen, die durch ein Wandelement 10 verschlossen ist. Das Wandelement 10 ist über eine Sollbruchstelle herausbrechbar, um die Einlassöffnung 9 freizulegen. Figur 5 zeigt die Installationsdose 1 mit noch durch das Wandelement 10 verschlossener Einlassöffnung 9. In Figur 6 ist das Wandelement 10 entfernt.

Die Einlassöffnung 9 mündet in einen Kanal 11, der auf der dem Installationsraum 4 abgewandten Rückseite des Bodens 2 vorgesehen ist. Der Kanal 11 erstreckt sich von der Einlassöffnung 9 in beide Richtungen weg und endet jeweils in einer seitlichen Auslassöffnung 12. Diese seitlichen Auslassöffnungen 12 sind im Wesentlichen im Übergangsbereich zwischen Boden 2 und Seitenwänden 3 angeordnet. Im dargestellten Beispiel ragt der Kanal 11 geringfügig seitlich über die Seitenwände 3 hinaus, so dass die seitlichen Auslassöffnungen 12 sich radial zur Seite und axial von dem Boden 2 weg öffnen.

Zusätzlich sind in dem Kanal 11 weitere Auslassöffnungen 13 vorgesehen, die sich zu der Rückseite des Bodens 2 hin öffnen. In den Figuren sind vier weitere Auslassöffnungen 13 dargestellt, die von der Einlassöffnung 9 versetzt angeordnet sind. Diese weiteren Auslassöffnungen 13 weisen einen deutlich kleineren Öffnungsquerschnitt als die seitlichen Auslassöffnungen 12 auf.

In seitlicher Verlängerung des Bodens 2 sind neben den seitlichen Auslassöffnungen 12 jeweils Vorsprünge 14 vorgesehen, die den an die seitlichen Auslassöffnungen 12 Bereich zur Rückseite des Bodens 2 hin abschirmen.

Die Installationsdose 1 kann einstückig, beispielsweise als ein Spritzgussteil aus Kunststoff, hergestellt sein. Wenn die Installationsöffnungen 5 mittels der Membran 6 verschlossen sind, kann die Installationsdose im Zweikomponenten-Spritzguss hergestellt sein.

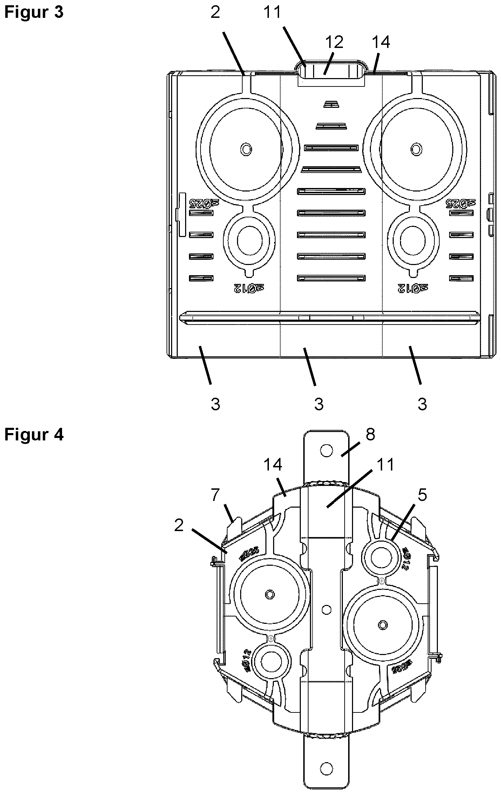

Wie insbesondere in den Figuren 3 und 6 gezeigt, ist der Kanal 11 durch eine in den Installationsraum 4 ragende Sicke in dem Boden und eine auf der Rückseite des Bodens 2 angeordnete Abdeckung gebildet. Der Kanal 11 kann auch vollständig auf der dem Installationsraum 4 abgewandten Rückseite des Bodens 2 ausgebildet sein oder weiter in Richtung des Installationsraums 4 versetzt angeordnet sein. Der ebene oder ggf. auch z.B. durch eine Sicke profilierte Boden 2 bildet dabei einen Teil der den Kanals 11 begrenzenden Kanalwandung.

Zur Montage der Installationsdose 1 wird diese mit dem Boden 2 voran in eine Wandöffnung (nicht gezeigt) eingesteckt, bis die Vorsprünge 8 am Rand der Wandöffnung anliegen und weiteres Einstecken verhindern. Hierbei werden die Halterippen 7 deformiert und verkrallen sich in der Laibung der Wandöffnung. Um Kabel oder Leerrohre in die Installationsdose 1 einzuführen, kann die Membran 6 der jeweiligen Installationsöffnung 5 durchstoßen werden. Um die Installationsdose 1 in der Wandöffnung zu verkleben, kann das Wandelement 10, das die Einlassöffnung 9 abdeckt, ausgebrochen werden.

Anschließend kann Montageschaum, d.h. beispielsweise ein Einkomponenten-Polyurethanschaum, über eine Lanze aus einer Montageschaum-Sprühdose durch die Einlassöffnung 9 in den Kanal 11 gesprüht werden. Der Montageschaum fließt dann in dem Kanal radial von der Einlassöffnung 9 weg in Richtung zu den seitlichen Auslassöffnungen 12. Diese sind im Übergangsbereich zwischen dem Boden 2 und den Seitenwänden 3 angeordnet. Dort kann der Montageschaum austreten und in den Zwischenraum zwischen der Laibung der Wandöffnung und den Seitenwänden 3 expandieren.

Aufgrund der Gestaltung des Kanals 11 und der seitlichen Auslassöffnungen 12 sowie der Vorsprünge 14 gelangt allenfalls eine geringe Menge des Montageschaums auf die dem Installationsraum 4 abgewandte Rückseite des Bodens 2. Um dennoch eine definierte kleinere Menge des Montageschaums auf die Rückseite des Bodens 2 zu leiten, kann dieser durch die weiteren Auslassöffnungen 13 austreten.

Mit der erfindungsgemäß gestalteten Installationsdose 1 ist es daher möglich, diese mittels Montageschaums in einer Wandöffnung zu verkleben, ohne dass eine zu große Menge des Montageschaums auf die Rückseite des Bodens 2 gelangt. Hierdurch wird das Risiko minimiert, dass der expandierende Montageschaum die Installationsdose 1 aus der Wandöffnung drückt.

### Bezugszeichen

- 1: Installationsdose
- 2: Boden
- 3: Seitenwand
- 4: Installationsraum
- 5: Installationsöffnung
- 6: Membran
- 7: Rippe
- 8: Vorsprung
- 9: Einlassöffnung
- 10: Wandelement
- 11: Kanal
- 12: seitliche Auslassöffnung
- 13: weitere Auslassöffnung
- 14: Vorsprung

## Patentansprüche

1. Installationsdose für die Elektroinstallation mit einem einseitig offenen, topfförmigen Dosenkörper, der wenigstens eine Seitenwand (3) und einen daran in einem Übergangsbereich anschließenden Boden (2) aufweist, die einen Installationsraum (4) umschließen, wobei in dem Dosenkörper mehrere aufbrechbare und/oder durchstoßbare Installationsöffnungen (5) vorgesehen sind, **dadurch gekennzeichnet, dass** auf der dem Installationsraum (4) abgewandten Rückseite des Bodens (2) ein Kanal (11) vorgesehen ist, in den wenigstens eine Einlassöffnung (9) aus dem Installationsraum (4) mündet, und dass der Kanal (11) wenigstens eine seitliche Auslassöffnung (12) aufweist, die in der Nähe des Übergangsbereichs positioniert ist.

2. Installationsdose nach Anspruch 1, **dadurch gekennzeichnet, dass** der Kanal (11) durch den Boden (2) und eine Abdeckung definiert ist, die einstückig mit dem Dosenkörper ausgebildet ist.

3. Installationsdose nach Anspruch 1 oder 2, **dadurch gekennzeichnet, dass** der Kanal (11) zumindest bereichsweise durch eine im Boden (2) ausgebildete Sicke, die in den Installationsraum (4) ragt, ausgebildet ist.

4. Installationsdose nach einem der vorhergehenden Ansprüche, **dadurch gekennzeichnet, dass** der Boden (2) eine Ebene definiert, wobei der Kanal (11) ganz oder teilweise in dieser Ebene liegt.

5. Installationsdose nach einem der vorhergehenden Ansprüche, **dadurch gekennzeichnet, dass** der Kanal (11) einen flachen Querschnitt mit einer im Vergleicht zu der Breite in der Ebene des Bodens (2) kleineren Erstreckung in der dazu senkrechten Tiefenrichtung aufweist.

6. Installationsdose nach einem der vorhergehenden Ansprüche, **dadurch gekennzeichnet, dass** der Kanal (11) im Wesentlichen mittig an dem Boden (2) angeordnet ist.

7. Installationsdose nach einem der vorhergehenden Ansprüche, **dadurch gekennzeichnet, dass** der Kanal (11) sich im Wesentlichen über die gesamte Breite des Bodens (2) erstreckt.

8. Installationsdose nach einem der vorhergehenden Ansprüche, **dadurch gekennzeichnet, dass** sich der Kanal (11) ausgehend von der wenigstens einen Einlassöffnung (9) in zwei Richtungen radial nach außen erstreckt und an seinen der wenigstens einen Einlassöffnung (9) abgewandten Enden jeweils eine seitliche Auslassöffnung (12) aufweist.

9. Installationsdose nach einem der vorhergehenden Ansprüche, **dadurch gekennzeichnet, dass** der Kanal (11) wenigstens eine weitere Auslassöffnung (13) aufweist, die auf die dem Installationsraum (4) abgewandte Seite des Bodens (2) mündet.

10. Installationsdose nach Anspruch 8 und 9, **dadurch gekennzeichnet, dass** der Kanal (11) eine Einlassöffnung (9), zwei seitliche Auslassöffnungen (12) und wenigstens zwei, insbesondere vier, weitere Auslassöffnungen (13) aufweist.

11. Installationsdose nach einem der Ansprüche 8 bis 10, **dadurch gekennzeichnet, dass** der Öffnungsquerschnitt der seitlichen Auslassöffnungen (12) größer ist als der Öffnungsquerschnitt der weiteren Auslassöffnungen (13).

12. Installationsdose nach einem der vorhergehenden Ansprüche, **dadurch gekennzeichnet, dass** der Kanal (11) seitlich über die wenigstens eine Seitenwand (3) hinausragt.

13. Installationsdose nach einem der vorhergehenden Ansprüche, **dadurch gekennzeichnet, dass** der Boden (2) angrenzend an die wenigstens eine seitliche Auslassöffnung des Kanals (11) wenigstens einen seitlich über die wenigstens eine Seitenwand (3) hinausragenden Vorsprung (14) aufweist.

14. Installationsdose nach einem der vorhergehenden Ansprüche, **dadurch gekennzeichnet, dass** die wenigstens eine Einlassöffnung (9) durch ein aufbrechbares Wandelement (10) und/oder eine durchstoßbare Membran (6) verschlossen ist.

15. Installationsdose nach einem der vorhergehenden Ansprüche, **dadurch gekennzeichnet, dass** der Dosenkörper sechs Seitenwände (3) aufweist.

16. Installationsdose nach einem der vorhergehenden Ansprüche, **dadurch gekennzeichnet, dass** an der wenigstens einen Seitenwand (3) deformierbare Halterippen (7) vorgesehen sind.

17. Installationsdose nach einem der vorhergehenden Ansprüche, **dadurch gekennzeichnet, dass** in dem Dosenkörper mehrere Installationsöffnungen (5) mit unterschiedlichem Öffnungsquerschnitt und/oder unterschiedlicher Kontur ausgebildet sind.

18. Installationsdose nach einem der vorhergehenden Ansprüche, **dadurch gekennzeichnet, dass** die Installationsöffnungen (5) mit einer durchstoßbaren, elastischen Membran (6) verschlossen sind.
